# EUROPEAN PATENT SPECIFICATION

(11) **EP 2 003 019 B1**
(45) Date of publication and mention of the grant of the patent: **23.04.2014**
(21) Application number: 08157416.2
(22) Date of filing: 02.06.2008
(51) Int. Cl.: B60R 1/00, B60R 11/02, B60R 11/04, B60R 11/00

(54) **Driving assist apparatus for vehicle**
Fahrunterstützungsvorrichtung für ein Kraftfahrzeug
Appareil de conduite assistée pour véhicule

(30) Priority: 13.06.2007 JP 2007156474; 13.06.2007 JP 2007156473
(43) Date of publication of application: 17.12.2008
(73) Proprietor: Aisin AW Co., Ltd., Fujii-cho Anjo-shi, Aichi 444-1192 (JP)
(72) Inventor: Kubota, Tomoki, Okazaki-shi Aichi 444-8564 (JP); Okabe, Hidefumi, Okazaki-shi Aichi 444-8564 (JP); Takagi, Minoru, Okazaki-shi Aichi 444-8564 (JP)
(74) Representative: TBK

(56) References cited:
- JP-A- 2004 064 131
- JP-A- 2005 204 132

## Description

The present invention relates to a driving assist apparatus for vehicle, and particularly to a driving assist apparatus for vehicle capable of reducing a blind spot for a driver formed by a pillar and so forth.

### 2. Description of the Related Art

Generally, a vehicle such as an automobile is provided with a plurality of pillars for supporting a roof on a vehicle body. Such pillars are necessary for ensuring the strength and safety of the vehicle body. However, the pillars are arranged to divide windowpanes, and thus constitute a cause for forming blind spots in the field of view of a driver. In light of this, to reduce the blind spot for the driver formed particularly by a front pillar, a technique of a driving assist apparatus has already been known which provides an inner surface of the front pillar with a display device including a display screen, such as a liquid crystal display, to display an image of the view outside the vehicle picked up by an image pick-up device on the display screen of the display device such that the image is connected to the view seen through the windowpanes (see Japanese Unexamined Patent Application Publication No. 2005-204132 and Japanese Registered Utility Model No. 3092174, for example).

Driving assist apparatuses known so far, such as the apparatuses described in the above patent documents, are configured such that a display device including a display screen of a shape substantially conforming to the shape of an inner surface of a pillar is disposed along the inner surface of the pillar. Practically, however, the shape of the display screen of the display device is limited by the production costs and so forth. Thus, it is difficult to make the shape of the display screen of the display device precisely conform to the shape of the inner surface of the pillar. To overcome this situation, it is conceivable to dispose the display screen inclined in the respective three-dimensional directions. In such a case, however, no specific proposal has been made so far on an appropriate configuration for reducing the computational load of image processing for causing the display device to display the image picked up by the image pick-up device, and for suppressing the deterioration in image quality.

The present invention has been made in light of the above circumstances, and an object of the present invention is to provide a driving assist apparatus for vehicle capable of reducing the computational load of the image processing for causing the display device to display the image picked up by the image pick-up device, and suppressing the deterioration in image quality, even if the display screen is disposed inclined in the respective three-dimensional directions.

To achieve the above object, a driving assist apparatus for vehicle according to an aspect of the present invention comprises an image pick-up device for picking up an image outside a vehicle , an apparatus body including an installation portion installed to an interior-side surface of a pillar of the vehicle , and a display device provided integrally with the apparatus body on an interior side of the apparatus body with respect to the installation portion, and including a display screen for displaying the image picked up by the image pick-up device. The image pick-up device is installed in an image pick-up device storage portion and disposed to an upper portion of a front window, the image pick-up device storage portion being provided integrally with the apparatus body.

The driving assist apparatus according to the present invention is characterized in that an image pick-up element of the image pick-up device is provided such that a roll angle of the image pick-up element is substantially equal to a roll angle of the display screen of the display device, wherein the roll angle of the image pick-up element is defined as an angle in an array direction of pixels of the image pick-up element with respect to an axis of horizon, around an orthogonal axis with respect to an image pick-up surface of the image pick-up element of the image pick-up device, and the roll angle of the display screen is defined as an angle in an array direction of pixels of the display screen with respect to the axis of horizon, around an orthogonal axis with respect to the display screen.

According to this characteristic configuration, even if the display screen is disposed inclined in the respective three-dimensional directions, image processing for correcting the influence of the inclination in a roll direction of the display screen can be reduced. Accordingly, it is possible to reduce the computational load of the image processing for causing the display device to display the image picked up by the image pick-up device, and to suppress the deterioration in image quality.

Further, the image processing for correcting the influence of the inclination in the roll direction of the display screen can be reduced. Accordingly, it is possible to reduce the computational load of the image processing for causing the display device to display the image picked up by the image pick-up device, and to suppress the deterioration in image quality.

The position and the image pick-up direction of the image pick-up device can be appropriately fixed with respect to the apparatus body. With a simple installation of the apparatus body to the pillar of the vehicle, therefore, the image pick-up device can also be appropriately installed to the vehicle at the same time. Accordingly, it is possible to simplify an operation of installing the driving assist apparatus to the vehicle and an operation of setting the driving assist apparatus.

The image pick-up device can be disposed at a position at which the image pick-up device does not obstruct the field of view of the driver.

Further, it is preferred that one side edge of the display screen is disposed along a side edge of the pillar.

According to this configuration, the one side edge of the display screen is disposed along the side edge of the pillar constituting the boundary of a blind spot area. Therefore, a blind spot area formed between the side edge of the pillar and the display screen can be reduced. Accordingly, it is possible to increase the area of the display screen and ensure the visibility of the display screen for the driver, while preventing a new blind spot from being formed by the disposition of the display screen.

Further, it is preferred that one side edge of the display screen is disposed along a front edge of a front pillar.

According to this configuration, the one side edge of the display screen is disposed along the front edge of the front pillar. Therefore, a blind spot area formed between the front edge of the front pillar and the display screen can be reduced. Accordingly, it is possible to increase the area of the display screen and ensure the visibility of the display screen for the driver, while preventing a new blind spot from being formed by the disposition of the display screen.

Further, it is preferred that the image pick-up device is disposed adjacent to the pillar.

According to this configuration, the image pick-up device can be disposed at a position relatively close to the display screen. Therefore, the image pick-up direction of the image pick-up device can be set closer to the direction of the line of sight of the driver passing through the display screen. Accordingly, it is possible to reduce the computational load of the image processing for causing the display device to display the image picked up by the image pick-up device, and to suppress the deterioration in image quality.

Further, it is preferred that the installation portion has a shape conforming to the shape of the interior-side surface of the pillar of the vehicle.

According to this configuration, the apparatus body can be suitably installed in place of or over an interior material of the pillar.

Further, it is preferred that the pillar is a front pillar of the vehicle, and the apparatus body serves also as an interior material of the front pillar and has a shape conforming to the shape of an interior-side surface of the front pillar.

Further, it is preferred that each of the image pick-up element and the display screen has a quadrangular shape.

According to this configuration, general-purpose image pick-up element and display screen can be suitably used. Accordingly, the production costs of the image pick-up device and the display screen can be limited.

Further, it is preferred that the driving assist apparatus for vehicle further includes an image processing unit for converting the image picked up by the image pick-up device into a driver viewpoint image which is an image seen from the viewpoint of a driver, converting the driver viewpoint image into a display screen image which is an image on a plane including the display screen, and outputting the display screen image to the display device.

According to this configuration, the image displayed on the display screen of the display device can be formed as an image connected to an outside view seen by the driver through windows of the vehicle. Accordingly, it is possible to display on the display screen an image of the blind spot area in a manner not causing discomfort to the driver, and thus to perform appropriate driving assist.

Fig. 1 is a diagram illustrating a vehicle installed with a driving assist apparatus for vehicle according to an embodiment of the present invention, as viewed from the viewpoint of a driver;

Fig. 2 is a diagram illustrating the vehicle installed with the driving assist apparatus for vehicle according to the embodiment of the present invention, as viewed from outside the vehicle;

Fig. 3 is a perspective view illustrating a display screen side of the driving assist apparatus for vehicle according to the embodiment of the present invention;

Fig. 4 is a perspective view illustrating an installation portion side of the driving assist apparatus for vehicle according to the embodiment of the present invention;

Fig. 5 is a schematic diagram illustrating a cross section along a V-V line of Fig. 2;

Fig. 6 is a diagram illustrating the disposition of a display screen within a blind spot area for a driver in the embodiment of the present invention;

Fig. 7 is a diagram illustrating the disposition of the display screen and the angle of the display screen in a yaw direction of the vehicle in the embodiment of the present invention, as viewed in a plane view;

Fig. 8 is a diagram illustrating the angle of the display screen in a pitch direction of the vehicle in the embodiment of the present invention;

Fig. 9 is a diagram illustrating the angle of the display screen in a roll direction of the vehicle in the embodiment of the present invention;

Figs. 10A to 10D are explanatory diagrams illustrating respective roll angles of an image pick-up element of an image pick-up device and the display screen according to the embodiment of the present invention;

Fig. 11 is an explanatory diagram illustrating operations of image processing performed by a control device according to the embodiment of the present invention;

Fig. 12 is a diagram illustrating a disposition configuration of the driving assist apparatus for vehicle according to another embodiment of the present invention; and

Fig. 13 is a diagram illustrating a disposition configuration of the image pick-up device of the driving assist apparatus for vehicle according to yet another embodiment of the present invention.

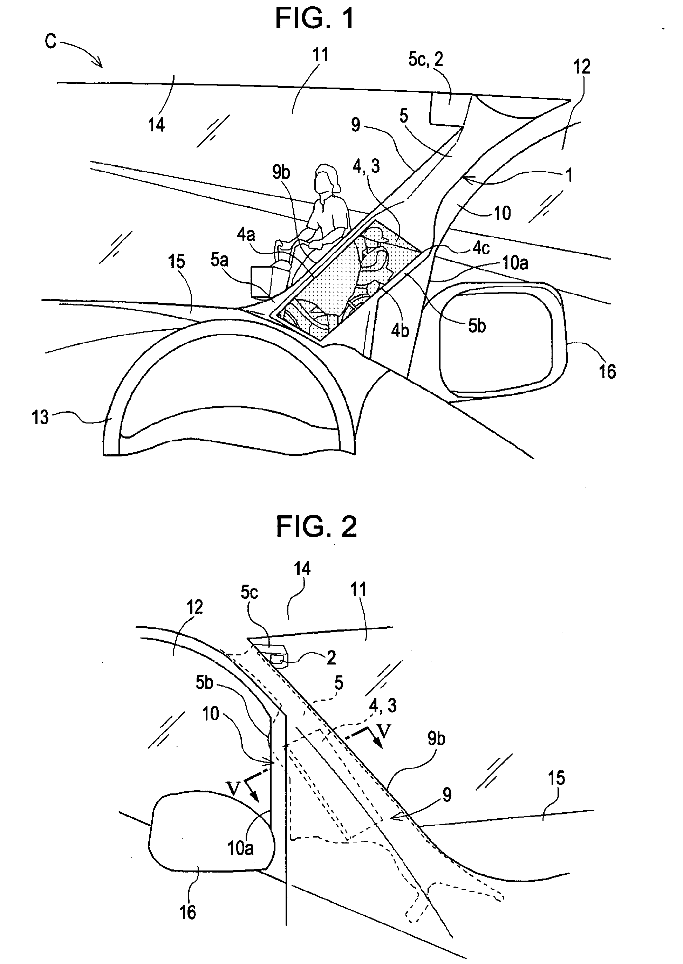

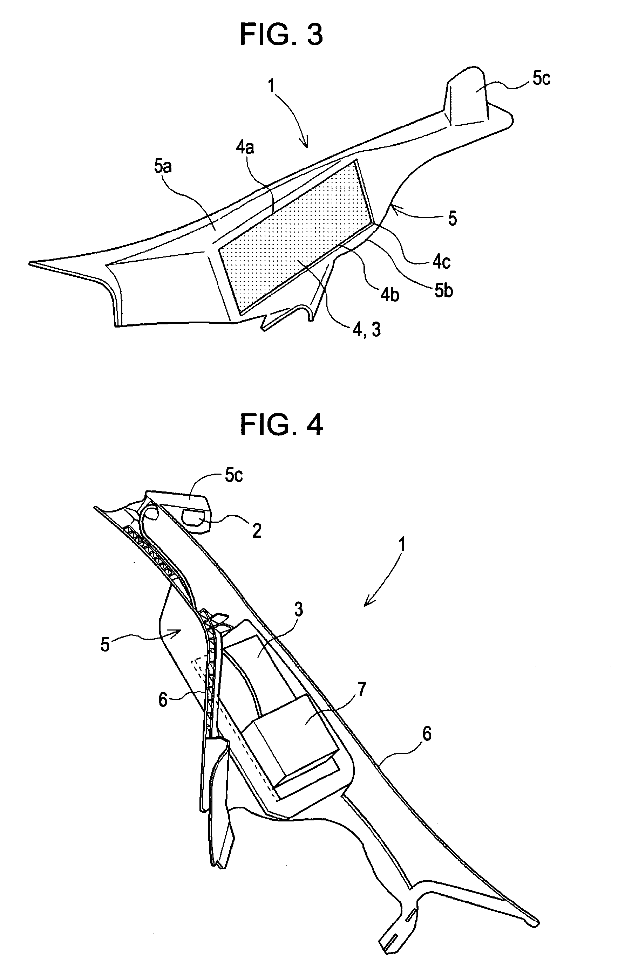

An embodiment of the present invention will be described below on the basis of the drawings. Fig. 1 is a diagram illustrating a vehicle C installed with a driving assist apparatus for vehicle 1 (hereinafter referred to as the driving assist apparatus 1) according to the present embodiment, as viewed from the viewpoint of a driver. Fig. 2 is a diagram illustrating the vehicle C installed with the driving assist apparatus 1, as viewed from outside the vehicle C. In the present embodiment, description will be made of an example in which the driving assist apparatus 1 is installed to a front pillar 9 (an example of a pillar) of the vehicle C, as illustrated in the above drawings. The driving assist apparatus 1 displays on a display screen 4 of a display device 3 an image of a blind spot behind the front pillar 9 as viewed from the viewpoint of the driver, to thereby reduce the blind spot for the driver and assist the driving of the vehicle C by the driver. In this case, as illustrated in Fig. 1, the image displayed on the display screen 4 has been processed into an image not causing discomfort to the driver, with the image having been subjected to image processing by a control device 7 (see Fig. 4) such that the processed image is connected to an outside view seen by the driver through a front window 11 and a side window 12. In the drawing, the reference numerals 13, 14, 15, and 16 indicate a steering wheel, a roof, a dashboard, and a sideview mirror, respectively.

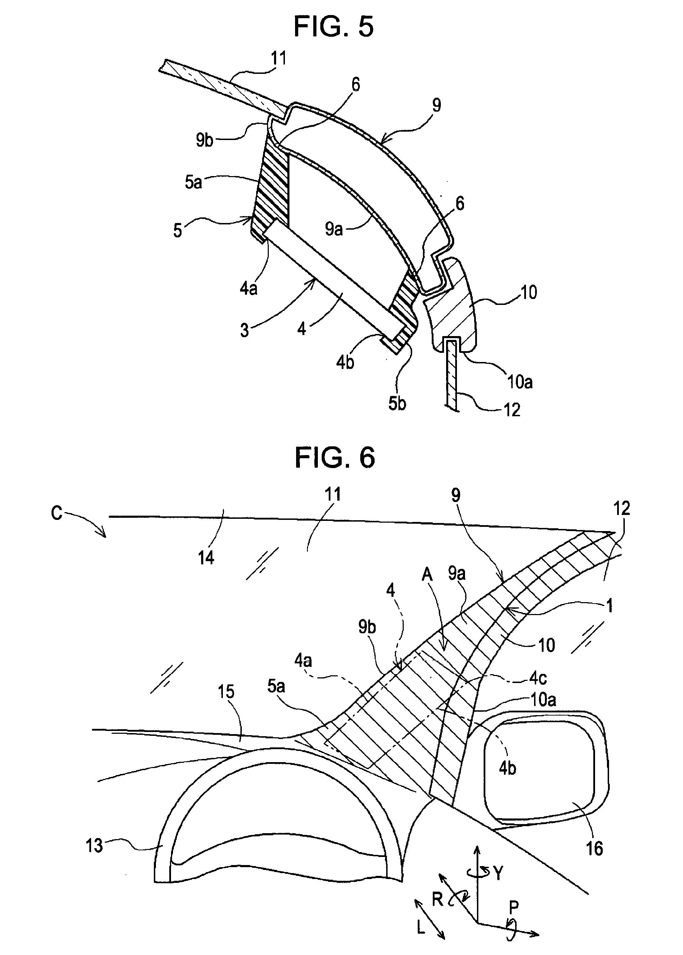

Figs. 3 and 4 are diagrams illustrating the driving assist apparatus 1 in isolation. That is, Fig. 3 is a perspective view illustrating a side of the driving assist apparatus 1 provided with the display screen 4. Meanwhile, Fig. 4 is a perspective view illustrating a side of the driving assist apparatus 1 provided with an installation portion 6. Fig. 5 is a schematic diagram illustrating a V-V cross section of Fig. 2. As illustrated in the above drawings, the driving assist apparatus 1 includes an image pick-up device 2, the display device 3 including the display screen 4, an apparatus body 5 including the installation portion 6, and the control device 7. On the basis of Figs. 1 to 5, a configuration of each of the above components will be described in detail below.

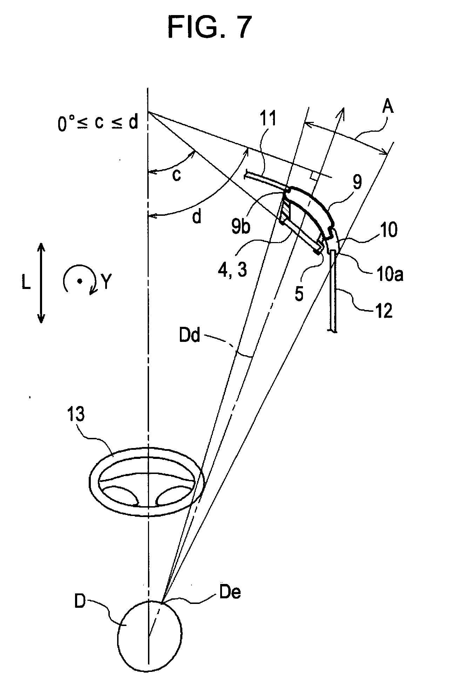

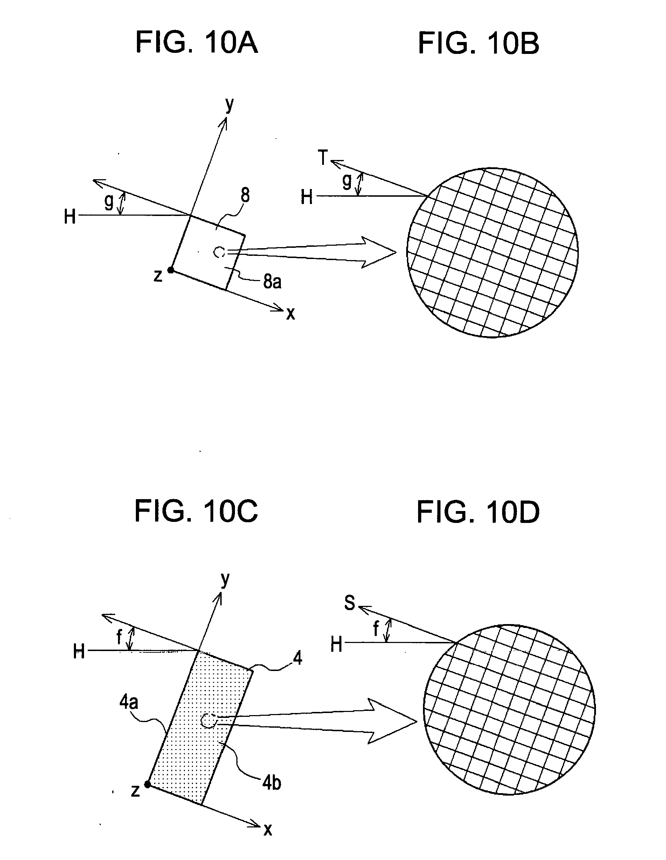

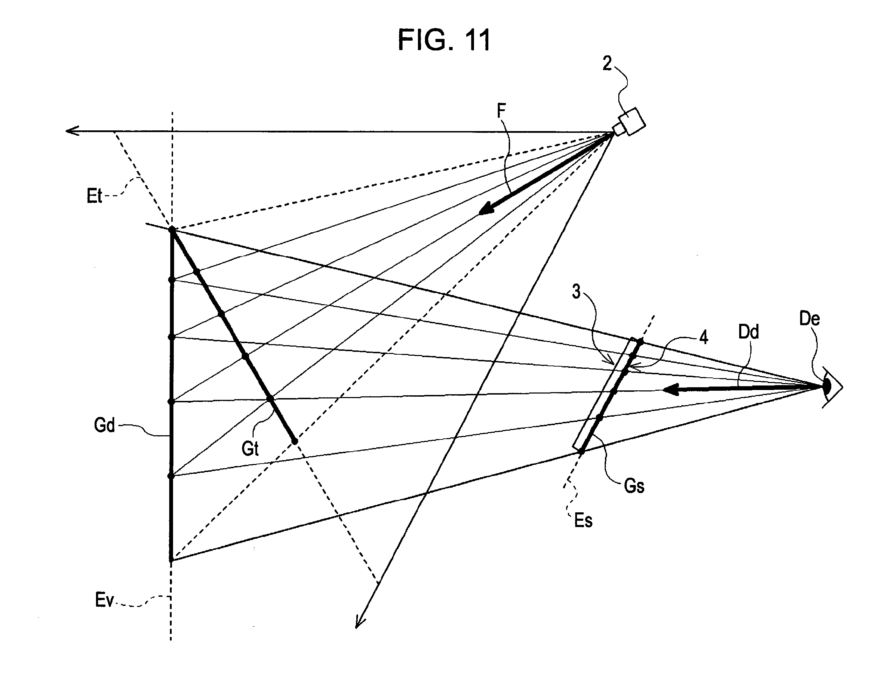

1. Image pick-up device: The image pick-up device 2 is a device for picking up an image outside the vehicle C. The image pick-up device 2 is constituted by an image pick-up element 8 (see Fig. 10A), such as a CCD (Charge Coupled Device) image sensor and a CMOS (Complementary Metal Oxide Semiconductor) image sensor, for example, and a camera provided with an optical system including lenses and so forth for guiding light to the image pick-up element 8. The image pick-up device 2 continuously picks up images at predetermined intervals, and outputs the information of the picked-up images to the control device 7 described later.
As illustrated in Figs. 1 and 2, in the present embodiment, the image pick-up device 2 is provided integrally with the apparatus body 5. Specifically, the image pick-up device 2 is stored and installed in a box-shaped image pick-up device storage portion 5c formed integrally with the apparatus body 5. Accordingly, the image pick-up device 2 is disposed in the interior of the vehicle C similarly to the apparatus body 5. Further, the image pick-up device 2 is disposed with an image pick-up direction F (see Fig. 11) thereof externally directed. The image pick-up direction F and the angle of view of the image pick-up device 2, for example, are set such that the image pick-up device 2 can pick up at least an image of a blind spot area A (see Figs. 6 and 7) behind the front pillar 9 as viewed from a driver D. A disposition configuration of the image pick-up device 2 will be described in detail later.

2. Display device: The display device 3 is a device for displaying the image picked up by the image pick-up device 2. As the display device 3, a variety of display devices, such as a liquid crystal display, a plasma display, an organic EL (electroluminescence) display, and a field emission display, for example, can be used. In the present embodiment, the display screen 4 of the display device 3 has a quadrangular shape (a rectangular shape in the present example). Therefore, a general-purpose display device can be suitably used as the display device 3, and thus the production costs of the display device 3 can be limited. The display screen 4 of the display device 3 displays the image corresponding to the view outside the vehicle C, which has been picked up by the image pick-up device 2 and subjected to predetermined image processing by the control device 7 described later. Specifically, the display screen 4 displays the image of the blind spot behind the front pillar 9 as viewed from the viewpoint of the driver D.

The display device 3 is provided integrally with the apparatus body 5, and includes the display screen 4 disposed on the interior side of the apparatus body 5 with respect to the installation portion 6 installed to the front pillar 9. That is, the display device 3 is installed and fixed to the apparatus body 5, with the display screen 4 directed toward the interior of the vehicle C (toward the driver D). Therefore, the display screen 4 of the display device 3 is disposed on the interior side of the apparatus body 5 with respect to the installation portion 6 installed to the interior-side surface of the front pillar 9. Further, the display screen 4 of the display device 3 is disposed within the blind spot area A (see Figs. 6 and 7) for the driver D, which is formed by the front pillar 9 and a window frame 10 (an example of an opaque member) of a door connected to the front pillar 9. A disposition configuration of the display screen 4 of the display device 3 will be described in detail later.

3. Apparatus body: The apparatus body 5 is a member constituting a body portion of the driving assist apparatus 1. The apparatus body 5 is formed into a complicated three-dimensional shape to meet a variety of requirements described later. It is therefore preferred to form the apparatus body 5 from a synthetic resin or the like which can be easily formed into a complicated shape. However, the material of the apparatus body 5 is not limited to the synthetic resin. Thus, a variety of materials can be used to form the apparatus body 5.

As illustrated in Figs. 4 and 5, the apparatus body 5 includes the installation portion 6 installed to an interior-side surface 9a of the front pillar 9 of the vehicle C. The installation portion 6 has a shape conforming to the shape of the interior-side surface 9a of the front pillar 9. In the present example, the installation portion 6 is constituted by an outer peripheral portion of a back surface of the apparatus body 5, i.e., a surface of the apparatus body 5 opposite to the display screen 4. To be in close contact with the interior-side surface 9a of the front pillar 9, the outer peripheral portion of the back surface of the apparatus body 5 constituting the installation portion 6 has a shape conforming to the shape of the interior-side surface 9a. In the present embodiment, the interior-side surface 9a of the front pillar 9 is not provided with an interior material. Thus, the apparatus body 5 is configured to serve also as the interior material of the front pillar 9, and has a shape covering the entirety of the interior-side surface 9a of the front pillar 9.

As described above, the apparatus body 5 supports the display device 3 on the interior side thereof with respect to the installation portion 6. Further, in the present embodiment, the apparatus body 5 also integrally supports the image pick-up device 2. Therefore, the shape of the apparatus body 5 determines the disposition configuration of the display screen 4 of the display device 3 and the disposition configuration of the image pick-up device 2. Further, to prevent a new blind spot from being formed by the provision of the driving assist apparatus 1, the whole apparatus body 5 is formed into a shape fitting within the blind spot area A for the driver D (see Figs. 6 and 7) formed by the front pillar 9 and the window frame 10 (an example of the opaque member) of the door adjoining the front pillar 9. Particularly, as illustrated in Figs. 1 and 3, to reduce the blind spot on the side of the front window 11, the apparatus body 5 is formed into a shape in which a front surface 5a, i.e., a side surface on the side of the front window 11 has a planar shape substantially parallel to a front edge 4a of the display screen 4, and in which a portion on the side of the front window 11 from the front edge 4a of the display screen 4 is set to have a minimum necessary width.

Further, as described later, an upper end portion 4c (see Fig. 1) of a rear edge 4b of the display screen 4 is disposed to be substantially aligned over a rear edge 10a of the window frame 10 of the door adjoining the front pillar 9. The apparatus body 5 is configured to support, with an extending portion 5b thereof extending from the side of the front pillar 9 toward the window frame 10 of the door, the above-described portion of the display screen 4 disposed within a portion of the blind spot area A formed by the window frame 10 (an example of the opaque member) of the door. That is, using the extending portion 5b extending from the side of the front pillar 9 toward the window frame 10 of the door, the apparatus body 5 supports the triangular portion of the display screen 4 near the upper end portion 4c of the rear edge 4b protruding from the front pillar 9 toward the window frame 10 of the door. Thus, as viewed from the front side of the display screen 4, the apparatus body 5 has the extending portion 5b extending from the side of the front pillar 9 toward the window frame 10 of the door and having a substantially triangular shape corresponding to the shape of an upper right corner of the display screen 4. As illustrated in Fig. 5, the extending portion 5b is disposed with a clearance from the window frame 10 of the door. With the provision of the extending portion 5b as described above, the door can be opened and closed irrespective of the disposition of the display screen 4 as described above.

As illustrated in Fig. 4, the control device 7 is disposed inside the apparatus body 5. In the present example, the control device 7 includes a control circuit for controlling the operations of the image pick-up device 2, the display device 3, and so forth, and an image processing circuit for performing the predetermined image processing on the data of the image picked up by the image pick-up device 2 for displaying an appropriate image on the display screen 4. Specifically, the control device 7 is configured to include wiring lines, a substrate formed with predetermined circuits, and so forth. In the present embodiment, therefore, the control device 7 constitutes an image processing unit of the present invention.

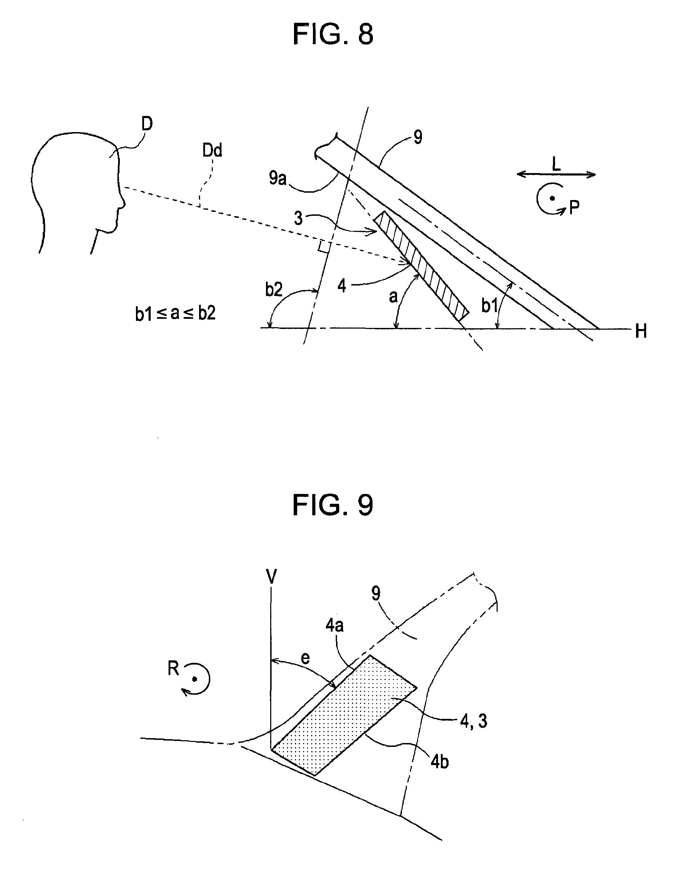

4. Disposition configuration of display screen: Description will now be made of the disposition configuration of the display screen 4 of the display device 3 in the driving assist apparatus 1. As described above, the disposition configuration of the display screen 4 is determined by the shape of the apparatus body 5, and particularly by the shape of a support portion thereof for supporting the display device 3 with respect to the installation portion 6. Therefore, the apparatus body 5 is assumed to set the positional relationship between the installation portion 6 and the display screen 4 to achieve the disposition configuration of the display screen 4 described below. The following description will be made with reference to Figs. 6 to 9, as required, which illustrate the disposition configuration of the display screen 4. Fig. 6 is a diagram illustrating the disposition of the display screen 4 within the blind spot area A for the driver D formed by the front pillar 9 and the window frame 10 of the door adjoining the front pillar 9. In the drawing, a hatched area corresponds to the blind spot area A, and a long dashed double-short dashed line indicates the outline of the display screen 4 seen from the viewpoint of the driver D. Further, rotation directions Y, P, and R indicated in the drawing represent a yaw direction Y, a pitch direction P, and a roll direction R of the vehicle c, respectively. Meanwhile, Fig. 7 illustrates the disposition of the display screen 4 and the angle of the display screen 4 in the yaw direction Y of the vehicle C, as viewed in a plane view. Further, Fig. 8 illustrates the angle of the display screen 4 in the pitch direction P of the vehicle C, and Fig. 9 illustrates the angle of the display screen 4 in the roll direction R of the vehicle C. As illustrated in Fig. 6, "the angle in the yaw direction Y of the vehicle C" refers to an angle around a vertical axis. Further, "the angle in the pitch direction P of the vehicle C" refers to an angle around a horizontal axis perpendicular to an anteroposterior direction L of the vehicle C. Further, "the angle in the roll direction R of the vehicle C" refers to an angle around a horizontal axis parallel to the anteroposterior direction L of the vehicle C. Herein, "the angle of the display screen" refers to an angle of the display screen in a direction parallel to the display screen.

As illustrated in Figs. 6 and 7, the display screen 4 of the display device 3 is disposed to fit within the blind spot area A for the driver D. In this case, a portion of the display screen 4 is disposed in the portion of the blind spot area A formed by the window frame 10 of the door. Herein, the blind spot area A refers to the area of a blind spot formed within the field of view of the driver D by a pillar and an opaque member connected to the pillar. In the present embodiment, the blind spot area A is formed by the front pillar 9 and the window frame 10 (an example of the opaque member) of the door adjoining the front pillar 9. More specifically, the blind spot area A corresponds to an area seen from a viewpoint De of the driver D, the opposite sides of which are sandwiched by a front edge 9b of the front pillar 9 and the rear edge 10a of the window frame 10 of the door adjoining the front pillar 9. Further, the blind spot area A adjoins the roof 14 at an upper portion thereof and the dashboard 15 at a lower portion thereof. In the present example, the position of the viewpoint taken by the driver D of an average physical size in a normal driving position, which is employed in the development of the vehicle C, for example, is used as a reference for the viewpoint De of the driver D.

The display screen 4 has one side edge disposed along a side edge of the pillar constituting the boundary of the blind spot area A, and the other side edge, at least a portion of which is disposed to be substantially aligned over a side edge of the opaque member constituting the boundary of the blind spot area A. As described above, in the present embodiment, the boundary of the blind spot area A is constituted by the front edge 9b of the front pillar 9 and the rear edge 10a of the window frame 10 of the door constituting the opaque member adjoining the front pillar 9. As illustrated in Figs. 1 and 6, therefore, the display screen 4 is disposed such that the front edge 4a (an example of the one side edge) is disposed along the front edge 9b of the front pillar 9, and that the upper end portion 4c of the rear edge 4b (an example of the other side edge) is substantially aligned over the rear edge 10a (an example of the side edge of the opaque member) of the window frame 10 of the door adjoining the front pillar 9. With the display screen 4 thus disposed, an area near the upper right corner of the display screen 4 as viewed from the viewpoint De of the driver D illustrated in Figs. 1 and 6 is disposed in the portion of the blind spot area A formed by the window frame 10 of the door. Therefore, even if the shape of the display screen 4 is quadrangular, as in the present embodiment, it is possible to increase the area of the display screen 4 and ensure the visibility of the display screen 4 for the driver D, while preventing a new blind spot from being formed by the disposition of the display screen 4.

Further, to prevent the formation of a new blind spot while ensuring the visibility for the driver D, the display screen 4 of the display device 3 is disposed with an appropriate angle set for each of the three-dimensional directions, i.e., the pitch direction P, the yaw direction Y, and the roll direction R of the vehicle C. That is, as illustrated in Fig. 8, as for the angle in the pitch direction P of the vehicle C, an angle a of the display screen 4 in the pitch direction is set within a range from an angle parallel to an inclination angle b1 of the front pillar 9 in the pitch direction to an angle b2 perpendicular to a line-of-sight direction Dd of the driver D. In the drawing, in which the angles are illustrated as examples, the inclination angle b1 of the front pillar 9 in the pitch direction is approximately 35°, and the angle a of the display screen 4 in the pitch direction is approximately 50°, with the horizon H (an angle of 0°) used as a reference. With the angle a of the display screen 4 in the pitch direction set within the above-described range, the vertical length of the display screen 4 can be appropriately ensured in consideration of the visibility of the display screen 4. Further, the direction of a normal of the display screen 4 is directed more downward than the line-of-sight direction Dd of the driver D is. Thus, it is possible to prevent light incident from outside the vehicle C and reflected by the display screen 4 from making the display screen 4 difficult to view for the driver D, and at the same time to set the angle of the display screen 4 to an angle at which the driver D can comfortably view the display screen 4. Accordingly, the visibility of the display screen 4 for the driver D can be ensured.

Further, as illustrated in Fig. 7, as for the angle in the yaw direction Y of the vehicle C, an angle c of the display screen 4 in the yaw direction is set within a range from an angle d perpendicular to the line-of-sight direction Dd of the driver D to an angle parallel to the anteroposterior direction L of the vehicle C (an angle of 0°). In the drawing, in which the angles are illustrated as examples, the angle d perpendicular to the line-of-sight direction Dd of the driver D in the yaw direction Y of the vehicle C is approximately 70°, and the angle c of the display screen 4 in the yaw direction is approximately 50°, with the angle parallel to the anteroposterior direction L of the vehicle C (the angle of 0°) used as a reference. With the angle c of the display screen 4 in the yaw direction set within the above-described range, it is possible to appropriately ensure a width of the display screen 4, which is not excessively narrow and ensures the visibility of the display screen 4. Accordingly, the visibility of the display screen 4 for the driver D can be ensured.

Further, as illustrated in Fig. 9, as for the angle in the roll direction R of the vehicle C, an angle e of the one side edge of the display screen 4 is set to be an angle inclined with respect to a vertical direction V. In the drawing, in which the angle is illustrated as an example, the angle e of the front edge 4a of the display screen 4 in the roll direction is set to approximately 20° with respect to the vertical direction V. In the present embodiment, the display screen 4 has a quadrangular shape. Thus, the angle in the roll direction of the rear side edge 4b constituting the other side edge of the display screen 4 has the same angle. With the angle e of the display screen 4 in the roll direction set within the above-described range, the quadrangular display screen 4 can also be disposed inclined along the inclination angle of the front pillar 9. It is therefore possible to dispose the quadrangular display screen 4 by effectively using the blind spot area A for the driver D formed by the front pillar 9 and the window frame 10 of the door adjoining the front pillar 9. Accordingly, it is possible to ensure the visibility of the display screen 4 for the driver D while preventing the formation of a new blind spot.

5. Disposition configuration of image pick-up device: Description will now be made of the deposition configuration of the image pick-up device 2 in the driving assist apparatus 1. As described above, in the present embodiment, the image pick-up device 2 is provided integrally with the apparatus body 5. Thus, the deposition configuration of the image pick-up device 2 is determined by the shape of the apparatus body 5, and particularly by the position and shape of the image pick-up device storage unit 5c, which constitutes the support portion for supporting the image pick-up device 2, with respect to the installation portion 6. Therefore, the apparatus body 5 is assumed to set the positional relationship between the installation portion 6 and the image pick-up device 2 to achieve the deposition configuration of the image pick-up device 2 described below.

As illustrated in Figs. 1 and 2, the image pick-up device 2 is disposed to the upper portion of the front window 11 of the vehicle C. Further, the image pick-up device 2 is disposed adjacent to the front pillar 9. In the present embodiment, therefore, the image pick-up device 2 is installed in the image pick-up device storage portion 5c, which is formed to laterally protrude toward the front window 11 from the vicinity of an upper end portion of the apparatus body 5 provided along the front pillar 9. As described above, the apparatus body 5 is formed to cover the entirety of the interior-side surface 9a of the front pillar 9. Thus, with the image pick-up device 2 installed in the image pick-up device storage portion 5c formed in the vicinity of the upper end portion of the apparatus body 5, the image pick-up device 2 can be disposed to the upper portion of the front window 11. Further, with the image pick-up device 2 installed in the image pick-up device storage portion 5c formed to laterally protrude toward the front window 11 from the apparatus body 5 provided along the front pillar 9, the image pick-up device 2 can be disposed adjacent to the front pillar 9. Further, the image pick-up device 2 is disposed to pick up the outside image from the interior of the vehicle C, and the image pick-up direction F (see Fig. 11) and the angle of view of the image pick-up device 2, for example, are set such that the image pick-up device 2 can pick up at least the image of the blind spot area A (see Figs. 6 and 7) behind the front pillar 9 as viewed from the driver D.

As described above, the image pick-up device 2 includes the image pick-up element 8 serving as the image sensor. Thus, a roll angle g of the image pick-up element 8 will now be described. Figs. 10A to 10D are explanatory diagrams illustrating the respective roll angles of the image pick-up element 8 of the image pick-up device 2 and the display screen 4. In the drawings, Figs. 10A and 10B are explanatory diagrams of the roll angle g of the image pick-up element 8, with Fig. 10B showing an enlarged view of a relevant part of Fig. 10A. Further, Figs. 10C and 10D are explanatory diagrams of a roll angle f of the display screen 4, with Fig. 10D showing an enlarged view of a relevant part of Fig. 10C. In the drawings, an image pick-up surface 8a of the image pick-up element 8 and the display screen 4 are illustrated on the same plane, irrespective of the respective directions of the display screen 4 and the image pick-up surface 8a of the image pick-up element 8 as installed in the apparatus body 5.

As illustrated in Figs. 10A to 10D, in the present driving assist apparatus 1, to reduce the computational load of the image processing by the control device 7 and suppress the deterioration in image quality, the image pick-up element 8 of the image pick-up device 2 is provided such that the roll angle g of the image pick-up element 8 is substantially equal to the roll angle f of the display screen 4. Herein, the roll angle g of the image pick-up element 8 is a roll angle in an array direction T of pixels of the image pick-up element 8, and the roll angle f of the display screen 4 is a roll angle in an array direction S of pixels of the display screen 4. Each of the array directions T and S of the pixels is a direction in which the pixels are arrayed in accordance with a predetermined rule. In a single image pick-up element 8 or display screen 4, therefore, the array direction may take a plurality of directions, such as one direction along a single straight line, two directions along two mutually perpendicular straight lines, and three directions along tree straight lines each having a pitch of 60°. In the illustrated example, each of the roll angles is an angle defined with reference to the horizon H. In the present embodiment, the image pick-up element 8 is assumed to have a quadrangular shape (a square shape in the present example). As described above, the display screen 4 is also assumed to have a quadrangular shape (a rectangular shape in the present example). Further, the pixels of the image pick-up element 8 are arrayed in a grid parallel to the respective sides of the image pick-up element 8, and the pixels of the display screen 4 are arrayed in a grid parallel to the respective sides of the display screen 4. In this case, each of the array directions T and S of the pixels of the image pick-up element 8 and the display screen 4 has two directions. In the present embodiment, therefore, the roll angle g of the image pick-up element 8 is equal to a roll angle of the outline (or the respective sides) of the image pick-up element 8, and the roll angle f of the display screen 4 is equal to a roll angle of the outline (or the respective sides) of the display screen 4. The shape of the respective pixels of the image pick-up element 8 and the display screen 4 is not limited to the quadrangular shape as illustrated in Figs. 10B and 10D, but may take such shapes as a circular shape and a variety of polygonal shapes including a hexagonal shape and a rhombic shape, for example.

Further, in the present example, the roll angle g of the image pick-up element 8 is an angle around an orthogonal axis with respect to the image pick-up surface 8a of the image pick-up element 8, and the roll angle f of the display screen 4 is an angle around an orthogonal axis with respect to the display screen 4. That is, irrespective of the respective directions of the display screen 4 and the image pick-up surface 8a of the image pick-up element 8 as installed in the apparatus body 5, the image pick-up element 8 and the display screen 4 are provided rotated around the respective orthogonal axes in the same direction by substantially the same angle. As described above, in Figs. 10A and 10C, the image pick-up surface 8a of the image pick-up element 8 and the display screen 4 are illustrated on the same plane. That is, as illustrated in Fig. 10A, the image pick-up surface 8a of the image pick-up element 8 is disposed on a plane formed by an x-axis and a y-axis defined on the drawing, and the orthogonal axis of the image pick-up surface 8a is a z-axis. The orthogonal z-axis of the image pick-up surface 8a corresponds to the optical axis of the image pick-up device 2. Similarly, as illustrated in Fig. 10C, the display screen 4 is disposed on the plane formed by the x-axis and the y-axis defined on the drawing, and the orthogonal axis of the display screen 4 is the z-axis. In the example illustrated in Figs. 10A to 10D, the roll angle g around the orthogonal z-axis of the image pick-up element 8 is approximately 20°, and the roll angle f around the orthogonal z-axis of the display screen 4 is also approximately 20°. That is, the two roll angles are set to be substantially equal to each other. With this configuration, the image processing for correcting the influence of the inclination in the roll direction of the display screen 4 can be reduced, even if the display screen 4 is disposed inclined in the respective three-dimensional directions, as described above, to prevent the formation of a new blind spot while ensuring the visibility of the display screen 4 for the driver D (see Fig. 7). Accordingly, it is possible to reduce the computational load of the image processing by the control device 7, and to suppress the deterioration in image quality.

In a state in which the image pick-up device 2 and the display device 3 are actually installed to the apparatus body 5, the direction of the orthogonal z-axis representing the direction of the image pick-up surface 8a of the image pick-up element 8 and the direction of the orthogonal z-axis representing the direction of the display screen 4 do not match each other, unlike in the state illustrated in Figs. 10A to 10D. Therefore, the image pick-up surface 8a of the image pick-up element 8 and the display screen 4 are located on different planes.

6. Image processing by control device: Operations of the image processing by the control device 7 (see Fig. 4) will now be described. The control device 7 serving as the image processing unit performs the image processing of converting a picked-up image Gt picked up by the image pick-up device 2 into a driver viewpoint image Gd which is an image seen from the viewpoint De of the driver D, and thereafter converting the driver viewpoint image Gd into a display screen image Gs which is an image on a plane including the display screen 4 of the display device 3. Then, the control device 7 outputs the information of the converted display screen image Gs to the display device 3 to cause the display screen 4 to display the image. The image processing by the control device 7 will be described below on the basis of Fig. 11.

The control device 7 uses, as the conditions for the image processing, relevant information on the positions, the directions, and so forth of the viewpoint De of the driver D, the image pick-up device 2, the display screen 4 of the display device 3, and a virtual plane Ev for forming the driver viewpoint image Gd. In the present example, as described above, the image pick-up device 2 and the display device 3 are provided integrally with the apparatus body 5 installed to the vehicle C. Thus, the position and the image pick-up direction F (the direction of the optical axis) of the image pick-up device 2 and the roll angle g (see Figs. 10A and 10B) of the image pick-up element 8 are specified with the vehicle C used as a reference. Similarly, the position, the direction, and the roll angle f (see Figs. 10C and 10D) of the display screen 4 of the display device 3 are also specified with the vehicle C used as a reference. The position and so forth of the display screen 4 may be specified as the information on the coordinates of three corners of the quadrangular display screen 4.

Meanwhile, the viewpoint De of the driver D varies depending on individual drivers. Thus, the position of the viewpoint De of the driver D is specified by a not-illustrated viewpoint position specification unit. The viewpoint position specification unit can include a unit for picking up a face image of the driver D through a camera or the like set in the vehicle interior, for example, and analyzing the face image to detect the position of the viewpoint De of the driver D. Alternatively, the viewpoint position specification unit can include a unit for detecting the position of the head of the driver D through an ultrasonic sensor, a laser scanner, or the like, and estimating the position of the viewpoint De of the driver D from the detected position of the head. Alternatively, the viewpoint position specification unit can include a unit for detecting the angle of a rearview mirror or the sideview mirror 16 of the vehicle C, the position of a seat, the height of a headrest, and so forth through sensors provided to the respective components, and indirectly detecting the position of the viewpoint De of the driver D from the values obtained from the detection. Alternatively, the viewpoint position specification unit can include a unit for prompting the driver D to input his physical information, such as the standing height and the sitting height, and estimating the position of the viewpoint De of the driver D on the basis of the input information. Further alternatively, the viewpoint position specification unit can include a unit for displaying an image of the outside view on the display device 3 by using the position of the viewpoint De of the driver D estimated on the assumption that the driver D has an average physical size and takes a normal driving position, and thereafter allowing the driver D to manually adjust the position and direction of the image displayed on the display screen 4 while viewing the image such that the image matches the actual view. With the position of the viewpoint De of the driver D thus specified, the line-of-sight direction Dd of the driver D is specified as the direction away from the position of the viewpoint De of the driver D toward a central portion of the display screen 4.

The position and direction of the virtual plane Ev for forming the driver viewpoint image Gd is appropriately determined on the basis of such conditions as the respective positions and directions of the viewpoint De of the driver D specified as described above, the image pick-up device 2, and the display screen 4 of the display device 3. As the method of determining the virtual plane Ev, it is preferred to determine the virtual plane Ev as, for example, a vertical plane perpendicular to the line-of-sight direction Dd in a plane view and including a point at which a straight line extending from the viewpoint De of the driver D in the line-of-sight direction Dd intersects with the ground. Alternatively, the virtual plane Ev may be determined as a vertical plane perpendicular to the line-of-sight direction Dd in a plane view and disposed at a position away from the viewpoint De of the driver D or the image pick-up device 2 by a predetermined distance. In this case, it is preferred to set the distance from the viewpoint De of the driver D or the image pick-up device 2 within a range from 5 to 50 m, for example. The virtual plane Ev is not limited to the vertical plane, but may be a plane inclined with respect to the vertical direction, such as a plane perpendicular to the line-of-sight direction Dd of the driver D, for example, or may be a curved plane such as a spherical plane.

Using the conditions specified as described above, the control device 7 performs the image processing of the picked-up image Gt picked up by the image pick-up device 2, as illustrated in Fig. 11. In Fig. 11, the positions of corresponding pixels on the respective images Gt, Gd, and Gs are indicated by circles. The arrangements of the circles on the respective images Gt, Gd, and Gs show how the image processing changes six pixels aligned at equal intervals on an image pick-up plane Et including the picked-up image Gt. Herein, the image pick-up plane Et is a plane parallel to the image pick-up surface 8a (see Fig. 10A) of the image pick-up element 8 and perpendicular to the image pick-up direction F (the direction of the optical axis). In Fig. 11, the image pick-up device 2 is disposed above the display screen 4 in accordance with the configuration of the driving assist apparatus 1 according to the present embodiment. To improve the visibility of the drawing, the relationship between the line-of-sight direction Dd of the driver D and the image pick-up direction F is represented with a greater angle than an actual angle.

The control device 7 first performs a conversion process of converting the picked-up image Gt picked up by the image pick-up device 2 into the driver viewpoint image Gd which is the image seen from the viewpoint De of the driver D. As the conversion process, the control device 7 herein performs a projective transformation on the basis of the relationship between the image pick-up plane Et including the picked-up image Gt and the virtual plane Ev obtained as described above. The control device 7 performs the projective transformation, on the basis of the difference in angle between an orthogonal axis of the image pick-up plane Et and an orthogonal axis of the virtual plane Ev, such that the picked-up image Gt is projected on a plane inclined by the difference in angle. The image thus projected on the virtual plane Ev constitutes the driver viewpoint image Gd. Therefore, the intervals between the respective pixels, which are equal in the picked-up image Gt, are changed in the driver viewpoint image Gd. In the example illustrated in Fig. 11, due to the projective transformation, the intervals between the pixels are converted to be greater toward a downward direction of the driver viewpoint image Gd.

Then, the control device 7 performs a conversion process of converting the driver viewpoint image Gd generated by the above-described conversion into the display screen image Gs which is the image on the plane including the display screen 4 of the display device 3. As the conversion process, the control device 7 herein performs a projective transformation on the basis of the relationship between the virtual plane Ev and a display plane Es including the display screen 4. The control device 7 performs the projective transformation, on the basis of the difference in angle between an orthogonal axis of the virtual plane Ev and an orthogonal axis of the display plane Es, such that the driver viewpoint image Gd is projected on a plane inclined by the difference in angle. The image thus projected on the display plane Es constitutes the display screen image Gs. Therefore, the intervals between the respective pixels, which are equal in the picked-up image Gt, are further changed in the display screen image Gs, as compared with the driver viewpoint image Gd. In the example illustrated in Fig. 11, due to the projective transformation, the intervals between the pixels are converted to be further greater toward a downward direction of the display screen image Gs, as compared with the driver viewpoint image Gd.

Then, from the display screen image Gs generated by the above-described conversion, the control device 7 extracts a portion corresponding to the display area of the display screen 4, and outputs to the display device 3 the portion to be displayed on the display screen 4. The portion corresponding to the display area of the display screen 4 included in the display plane Es including the display screen image Gs can be specified on the basis of the position of the viewpoint De of the driver D and the line-of-sight direction Dd specified as described above, and the position, the direction, and the roll angle f of the display screen 4 of the display device 3. From the display screen image Gs, therefore, the control device 7 extracts the thus specified portion corresponding to the display area of the display screen 4. The thus extracted image is then displayed on the display screen 4 by the display device 3. As described above, the image pick-up element 8 of the image pick-up device 2 is provided such that the roll angle g of the image pick-up element 8 is substantially equal to the roll angle f of the display screen 4 (see Figs. 10A to 10D). In the above display process, therefore, the roll angle in the array direction of the respective pixels constituting the display screen image Gs is substantially equal to the roll angle f in the array direction S of the pixels of the display screen 4. Thus, the image processing for correcting the influence of the inclination in the roll direction of the display screen 4 can be reduced. Therefore, it is possible to reduce the computational load of the image processing by the control device 7, and to suppress the deterioration in image quality. With the image processing performed in the above-described manner, the image displayed on the display screen 4 of the display device 3 constitutes an image connected to the outside view seen by the driver D through the front window 11 and the side window 12. Accordingly, it is possible to display on the display screen 4 the image of the blind spot area A in a manner not causing discomfort to the driver D, and thus to perform the appropriate driving assist.

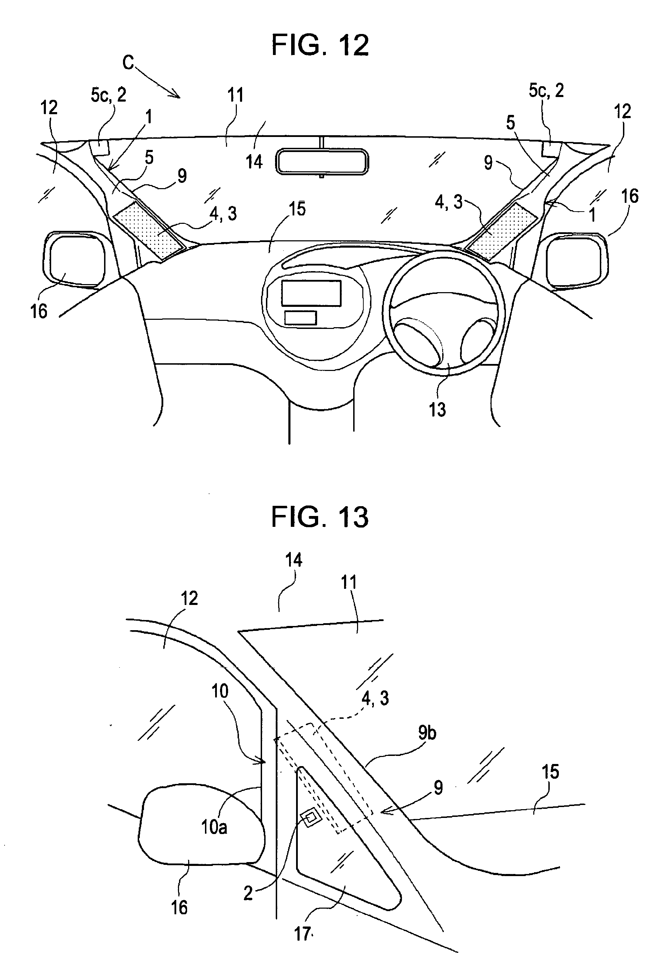

7. Other embodiments: (1) In the above-described embodiment, the description has been made of the example in which the driving assist apparatus 1 according to the present invention is installed to the front pillar 9 on the side of the driver's seat. However, the embodiment of the present invention is not limited thereto. Thus, as illustrated in Fig. 12, for example, it is also preferred to configure the embodiment of the present invention such that the driving assist apparatus 1 is similarly installed to the front pillar 9 on the side of a passenger seat, in addition to the front pillar 9 on the side of the driver's seat. In this case, it is preferred to configure the driving assist apparatus 1 on the side of the passenger seat to be mirror-symmetrical with respect to the driving assist apparatus 1 described in the above-described embodiment. Further, although illustration is omitted, it is also preferred to provide the driving assist apparatus 1 according to the present invention not only to the front pillar 9 but also to a rear pillar, a side pillar, and so forth. In this case, too, the positional relationship between the installation portion 6 of the apparatus body 5 and the display screen 4 is set such that the display screen 4 is disposed within a blind spot area for the driver D formed by each of the pillars and an opaque member such as a door (including a rear door) connected to the pillar.

(2) In the above-described embodiment, the description has been made of the example in which the image pick-up device 2 is installed to the upper portion of the front window 11 of the vehicle C. However, the disposition of the image pick-up device 2 is not limited to the above position. Thus, as illustrated in Fig. 13, for example, it is also preferred that, if a small window 17 is provided inside the front pillar 9 (an example of the pillar), the image pick-up device 2 is disposed at a position in the installation portion 6 of the apparatus body 5 corresponding to the small window 17. In this case, at the position in the installation portion 6 corresponding to the small window 17, the apparatus body 5 includes a support portion for supporting the image pick-up device 2 to dispose the image pick-up device 2 at the position. If the image pick-up device 2 is disposed at the above position, the image pick-up direction F of the image pick-up device 2 can be set closer to the line-of-sight direction Dd of the driver D (see Fig. 11). It is therefore possible to further reduce the computational load of the image processing by the control device 7, and to suppress the deterioration in image quality.

(3) In the above-described embodiment, the description has been made of the example in which the opaque member is the window frame 10 of the door. However, the opaque member connected to the pillar in the present invention is not limited to the window frame 10 of the door. Thus, each of a seal material for the door or window, a base portion of the sideview mirror, a door panel, the dashboard, the roof, and so forth also corresponds to the opaque member.

(4) In the above-described embodiment, the description has been made of the example in which the shape of the display screen 4 of the display device 3 is a rectangular shape. This is mainly because, if the shape of the display screen 4 is a rectangular shape, such as a square shape, the production costs can be kept inexpensive. If the issue of the production costs has been overcome, therefore, the display screen 4 can take such shapes as a rhombic shape, a trapezoidal shape, and a triangular shape, for example, or a variety of shapes including a circular shape or a curved line.

(5) In the above-described embodiment, the description has been made of the example of configuration in which the image pick-up device 2 is fixed to the apparatus body 5. However, the embodiment of the present invention is not limited thereto. Thus, as one of preferred embodiments of the present invention, there is a configuration in which an installation portion of the image pick-up device 2 installed to the apparatus body 5 includes an adjustment mechanism to enable the adjustment of the image pick-up direction F of the image pick-up device 2. Further, as one of preferred embodiments of the present invention, there is a configuration in which the image pick-up device 2 is provided separately from the apparatus body 5. In this case, the disposition of the image pick-up device 2 is not limited by the position of the apparatus body 5. Thus, the image pick-up device 2 can be disposed at an arbitrary position at which the image pick-up device 2 can pick up the image of the blind spot area A without obstructing the field of view of the driver D. Therefore, the image pick-up device 2 may be disposed on, for example, a back surface of the rearview mirror, the dashboard, or the like.

(6) In the above-described embodiment, the description has been made of the example of configuration in which the display device 3 is fixed to the apparatus body 5. However, the embodiment of the present invention is not limited thereto. Thus, as one of preferred embodiments of the present invention, there is a configuration in which an installation portion of the display device 3 installed to the apparatus body 5 includes an adjustment mechanism to enable the adjustment of the direction of the display screen 4 of the display device 3.

(7) In the above-described embodiment, the description has been made of the example in which the interior-side surface 9a of the front pillar 9 installed with the installation portion 6 of the apparatus body 5 is not provided with the interior material. However, the embodiment of the present invention is not limited thereto. Thus, as one of preferred embodiments of the present invention, there is a configuration in which the installation portion 6 of the apparatus body 5 has a shape conforming to the shape of the interior-side surface 9a of the front pillar 9 provided with the interior material and is installed over the interior material.

(8) In the above-described embodiment, the description has been made of the example of configuration in which the control device 7 performs the process of extracting, from the display screen image Gs subjected to two projective transformations, the portion corresponding to the display area of the display screen 4 and then outputting the portion to the display device 3. However, the image subjected to the extraction process is not limited to the display screen image Gs. Thus, the extraction process may be performed on the driver viewpoint image Gd or the picked-up image Gt. If the extraction process is thus performed on an image prior to the projective transformation, the amount of data of the image to be subjected to the projective transformation can be reduced. Thus, the computational load of the conversion process can be reduced. Therefore, if the extraction process is performed on the picked-up image Gt, the amount of data of the images to be subjected to the two projective transformations can be reduced. Thus, the computational load can be reduced most. In this case, the control device 7 inversely performs the above-described two projective transformations to obtain an area on the image pick-up plane Et corresponding to the display area of the display screen 4, and then performs a process of extracting from the picked-up image Gt a portion corresponding to the display area of the display screen 4.

Another characteristic configuration of the driving assist apparatus for vehicle according to the present embodiment includes an image pick-up device, an apparatus body, and a display device. The image pick-up device picks up an image outside a vehicle. The apparatus body includes an installation portion installed to an interior-side surface of a pillar of the vehicle. The display device is provided integrally with the apparatus body on an interior side of the apparatus body with respect to the installation portion, and includes a display screen for displaying the image picked up by the image pick-up device. Further, the apparatus body sets the positional relationship between the installation portion and the display screen such that the display screen is disposed within a blind spot area for a driver formed by the pillar and an opaque member connected to the pillar.

Therefore, even if the shape of the display screen is limited, it is possible to appropriately dispose the display screen, in consideration of a member other than the pillar that may form a blind spot for the driver, to prevent the formation of a new blind spot while ensuring the visibility of the display screen for the driver. Accordingly, it is possible to reduce the blind spot for the driver, and thus to perform effective driving assist.

Further, it is preferred that a portion of the display screen is disposed within a portion of the blind spot area formed by the opaque member. With this configuration, it is possible to dispose the display screen of the display device by effectively using the opaque member, such as a window frame of a door connected to the pillar. Therefore, even the shape of the display screen is limited, the size of the display screen can be appropriately ensured. Accordingly, it is possible to reduce the blind spot for the driver, and thus to perform effective driving assist.

Further, it is preferred to configure the apparatus body such that an extending portion thereof extending from the side of the pillar toward the opaque member supports a portion of the display screen disposed in a portion of the blind spot area formed by the opaque member. With this configuration, even if the portion of the display screen is disposed in the portion of the blind spot area formed by the opaque member, and if the opaque member connected to the pillar is a movable member such as a door, the display screen can be suitably disposed within the blind spot area for the driver formed by the pillar and the opaque member connected to the pillar.

Further, as for the angle of the display screen in the pitch direction of the vehicle, it is preferred that the apparatus body sets the positional relationship between the installation portion and the display screen such that the angle of the display screen is within a range from an angle parallel to an inclination angle of the pillar to an angle perpendicular to the line-of-sight direction of the driver. According to this configuration, it is possible to appropriately ensure the vertical length of the display screen in consideration of the visibility of the display screen. Further, the direction of a normal of the display screen is directed more downward than the line-of-sight direction of the driver is. It is therefore possible to prevent light incident from outside the vehicle and reflected by the display screen from making the display screen difficult to view for the driver, and at the same time to set the angle of the display screen to an angle at which the driver can comfortably view the display screen. Accordingly, the visibility of the display screen for the driver can be ensured.

Further, as for the angle of the display screen in the yaw direction of the vehicle, it is preferred that the apparatus body sets the positional relationship between the installation portion and the display screen such that the angle of the display screen is within a range from an angle perpendicular to the line-of-sight direction of the driver to an angle parallel to the anteroposterior direction of the vehicle.

According to this configuration, it is possible to appropriately ensure a width of the display screen, which is not excessively narrow and ensures the visibility of the display screen. Accordingly, the visibility of the display screen for the driver can be ensured.

Further, as for the angle of the display screen in the roll direction of the vehicle, it is preferred that the apparatus body sets the positional relationship between the installation portion and the display screen such that the angle of one side edge of the display screen is inclined with respect to the vertical direction.

According to this configuration, even if the shape of the display screen is limited, the display screen can be disposed inclined along an inclination angle of the pillar, for example. Accordingly, it is possible to dispose the display screen by effectively using the blind spot area for the driver formed by the pillar and the opaque member connected to the pillar.

Provided to a pillar of a vehicle, the present invention can reduce the blind spot for the driver, and thus can be suitably used to assist the driving of the vehicle by the driver.

The present invention provides a driving assist apparatus for vehicle capable of reducing the computational load of image processing for displaying on a display device an image picked up by an image pick-up device, and suppressing the deterioration in image quality, even if a display screen is disposed inclined in the respective three-dimensional directions. The apparatus includes an image pick-up device for picking up an image outside a vehicle, an apparatus body including an installation portion installed to an interior-side surface of a pillar of the vehicle, and a display device provided integrally with the apparatus body and including a display screen disposed on an interior side with respect to the installation portion. An image pick-up element of the image pick-up device is provided such that a roll angle of the image pick-up element is substantially equal to a roll angle of the display screen of the display device.

## Claims

1. A driving assist apparatus (**1**) for vehicle (**C**) comprising:
an image pick-up device (**2**) for picking up an image outside a vehicle (**C**);
an apparatus body (**5**) including an installation portion (**6**) installed to an interior-side surface of a pillar (**9**) of the vehicle (**C**); and
a display device (**3**) provided integrally with the apparatus body (**5**) on an interior side of the apparatus body (**5**) with respect to the installation portion (**6**), and including a display screen (**4**) for displaying the image picked up by the image pick-up device (**2**), wherein
the image pick-up device (**2**) is installed in an image pick-up device storage portion and disposed to an upper portion of a front window, the image pick-up device storage portion being provided integrally with the apparatus body (**5**),
**characterized in that**
an image pick-up element (**8**) of the image pick-up device (**2**) is provided such that a roll angle of the image pick-up element (**8**) is substantially equal to a roll angle of the display screen (**4**) of the display device (**3**), wherein
the roll angle of the image pick-up element is defined as an angle in an array direction of pixels of the image pick-up element (**8**) with respect to an axis of horizon (**H**), around an orthogonal axis with respect to an image pick-up surface of the image pick-up element (**8**) of the image pick-up device (**2**), and
the roll angle of the display screen is defined as an angle in an array direction of pixels of the display screen (**4**) with respect to the axis of horizon (**H**), around an orthogonal axis with respect to the display screen (**4**).

2. The driving assist apparatus (**1**) for vehicle (**C**) according to Claim 1,
wherein one side edge of the display screen (**4**) is disposed along a side edge of the pillar (**9**).

3. The driving assist apparatus (**1**) for vehicle (**C**) according to any one of Claims 1 or 2,
wherein one side edge of the display screen (**4**) is disposed along a front edge of a front pillar (**9**).

4. The driving assist apparatus (**1**) for vehicle (**C**) according to any one of Claims 1 to 3,
wherein the image pick-up device (**2**) is disposed adjacent to the pillar (**9**).

5. The driving assist apparatus (**1**) for vehicle (**C**) according to any one of Claims 1 to 4,
wherein the installation portion (**6**) has a shape conforming to the shape of the interior-side surface of the pillar (**9**) of the vehicle (**C**).

6. The driving assist apparatus (**1**) for vehicle (**C**) according to any one of Claims 1 to 5,
wherein the pillar (**9**) is a front pillar of the vehicle (**C**), and
the apparatus body (**5**) serves also as an interior material of the front pillar and has a shape conforming to the shape of an interior-side surface of the front pillar.

7. The driving assist apparatus (**1**) for vehicle (**C**) according to any one of Claims 1 to 6,
wherein each of the image pick-up element (**8**) and the display screen (**4**) has a quadrangular shape.

8. The driving assist apparatus (**1**) for vehicle (**C**) according to any one of Claims 1 to 7, further comprising:
an image processing unit for converting the image picked up by the image pick-up device (**2**) into a driver viewpoint image which is an image seen from the viewpoint of a driver, converting the driver viewpoint image into a display screen (**4**) image which is an image on a plane including the display screen (**4**), and outputting the display screen (**4**) image to the display device (**3**).

## Patentansprüche

1. Fahrunterstützungsvorrichtung (**1**) für ein Fahrzeug (**C**), mit:
einer Bildaufnahmevorrichtung (**2**) zum Aufnehmen eines Bildes außerhalb eines Fahrzeugs (**C**);
einem Vorrichtungskörper (**5**) umfassend einen Installationsabschnitt (**6**), der an einer inneren Seitenfläche einer Säule (**9**) des Fahrzeugs (**C**) installiert ist; und
einer Anzeigevorrichtung (**3**), die einstückig mit dem Fahrzeugkörper (**5**) an einer inneren Seite des Vorrichtungskörpers (**5**) bezüglich des Installationsabschnitts (**6**) bereitgestellt ist, und einen Anzeigebildschirm (**4**) zum Anzeigen des durch die Bildaufnahmevorrichtung (**2**) aufgenommenen Bildes umfasst, wobei
die Bildaufnahmevorrichtung (**2**) in einem Bildaufnahmevorrichtungsaufnahmeabschnitt installiert ist und an einem oberen Abschnitt eines vorderen Fensters angebracht ist, wobei der Bildaufnahmevorrichtungsaufnahmeabschnitt einstückig mit dem Vorrichtungskörper (**5**) bereitgestellt ist,
**dadurch gekennzeichnet, dass**
ein Bildaufnahmeelement (**8**) der Bildaufnahmevorrichtung (**2**) derart bereitgestellt ist, dass ein Rollwinkel des Bildaufnahmeelements (**8**) im Wesentlichen gleich einem Rollwinkel des Anzeigebildschirms (**4**) der Anzeigevorrichtung (**3**) ist, wobei
der Rollwinkel des Bildaufnahmeelements als ein Winkel in einer Zeilenrichtung von Pixeln des Bildaufnahmeelements (**8**) bezüglich einer Horizontachse (**H**) um eine orthogonale Achse bezüglich einer Bildaufnahmeoberfläche des Bildaufnahmeelements (**8**) der Bildaufnahmevorrichtung (**2**) definiert ist, und
der Rollwinkel des Anzeigebildschirms als ein Winkel in einer Zeilenrichtung von Pixeln des Anzeigebildschirms (**4**) bezüglich der Horizontachse (**H**) um eine orthogonale Achse bezüglich des Anzeigebildschirms (**4**) definiert ist.

2. Fahrunterstützungsvorrichtung (**1**) für ein Fahrzeug (**C**) gemäß Anspruch 1,
wobei eine Seitenkante des Anzeigebildschirms (**4**) entlang einer Seitenkante der Säule (**9**) angebracht ist.

3. Fahrunterstützungsvorrichtung (**1**) für ein Fahrzeug (**C**) gemäß einem der Ansprüche 1 oder 2,
wobei eine Seitenkante des Anzeigebildschirms (**4**) entlang einer Frontkante einer Frontsäule (**9**) angebracht ist.

4. Fahrunterstützungsvorrichtung (**1**) für ein Fahrzeug (**C**) gemäß einem der Ansprüche 1 bis 3,
wobei die Bildaufnahmevorrichtung (**2**) benachbart der Säule (**9**) angebracht ist.

5. Fahrunterstützungsvorrichtung (**1**) für ein Fahrzeug (**C**) gemäß einem der Ansprüche 1 bis 4,
wobei der Installationsabschnitt (**6**) eine Form aufweist, die mit der Form der innenseitigen Oberfläche der Säule (**9**) des Fahrzeugs (**C**) übereinstimmt.

6. Fahrunterstützungsvorrichtung (**1**) für ein Fahrzeug (**C**) gemäß einem der Ansprüche 1 bis 5,
wobei die Säule (**9**) eine Frontsäule des Fahrzeugs (**C**) ist, und
der Vorrichtungskörper (**5**) ebenso als ein Innenmaterial der Frontsäule dient und eine Form aufweist, die mit der Form einer innenseitigen Oberfläche der Frontsäule übereinstimmt.

7. Fahrunterstützungsvorrichtung (**1**) für ein Fahrzeug (**C**) gemäß einem der Ansprüche 1 bis 6,
wobei sowohl das Bildaufnahmeelement (**8**) als auch der Anzeigebildschirm (**4**) eine viereckige Form aufweisen.

8. Fahrunterstützungsvorrichtung (**1**) für ein Fahrzeug (**C**) gemäß einem der Ansprüche 1 bis 7, weiterhin mit:
einer Bildverarbeitungseinheit zum Konvertieren des durch die Bildaufnahmevorrichtung (**2**) aufgenommenen Bildes in ein Fahrerblickpunktbild, das ein Abbild gesehen aus der Sicht eines Fahrers ist, zum Konvertieren des Fahrerblickpunktbildes in ein Anzeigebildschirm- (**4**) Bild, das ein Bild in einer Ebene umfassend den Anzeigebildschirm (**4**) ist, und zum Ausgeben des Anzeigebildschirm- (**4**) Bildes zu der Anzeigevorrichtung (**3**).

## Revendications

1. Dispositif de conduite assistée (1) pour véhicule (C) comprenant :
un dispositif de saisie d'image (2) pour saisir une image à l'extérieur d'un véhicule (C) ;
un corps de dispositif (5) incluant une partie d'installation (6) installée sur une surface côté intérieur d'un montant (9) du véhicule (C) ;
et
un dispositif d'affichage (3) formant un seul bloc avec le corps de dispositif (5) sur un côté intérieur du corps de dispositif (5) relativement à la partie d'installation (6), et incluant un écran d'affichage (4) pour afficher l'image saisie par le dispositif de saisie d'image (2), dans lequel
le dispositif de saisie d'image (2) est installé dans une partie de rangement de dispositif de saisie d'image et disposé sur une partie supérieure d'une fenêtre avant, la partie de rangement de dispositif de saisie d'image étant formée d'un seul bloc avec le corps de dispositif (5),
**caractérisé en ce que**
un élément de saisie d'image (8) du dispositif de saisie d'image (2) est placé de telle manière qu'un angle de roulis de l'élément de saisie d'image (8) est sensiblement égal à un angle de roulis de l'écran d'affichage (4) du dispositif d'affichage (3), dans lequel
l'angle de roulis de l'élément de saisie d'image est défini comme un angle dans une direction de réseau des pixels de l'élément de saisie d'image (8) par rapport à un axe d'horizon (H), autour d'un axe orthogonal relativement à une surface de saisie d'image de l'élément de saisie d'image (8) du dispositif de saisie d'image (2), et
l'angle de roulis de l'écran d'affichage est défini comme un angle dans une direction de réseau des pixels de l'écran d'affichage (4) relativement à l'axe d'horizon (H) autour d'un axe orthogonal relativement à l'écran d'affichage (4).

2. Dispositif de conduite assistée (1) pour véhicule (C) selon la revendication 1,
dans lequel un bord latéral de l'écran d'affichage (4) est disposé le long d'un bord latéral du montant (9).

3. Dispositif de conduite assistée (1) pour véhicule (C) selon l'une quelconque des revendications 1 ou 2,
dans lequel un bord latéral de l'écran d'affichage (4) est disposé le long d'un bord avant d'un montant avant (9).

4. Dispositif de conduite assistée (1) pour véhicule (C) selon l'une quelconque des revendications 1 à 3,
dans lequel le dispositif de saisie d'image (2) est disposé adjacent au montant (9).

5. Dispositif de conduite assistée (1) pour véhicule (C) selon l'une quelconque des revendications 1 à 4,
dans lequel la partie d'installation (6) a une forme se conformant à la forme de la surface côté intérieur du montant (9) du véhicule (C).

6. Dispositif de conduite assistée (1) pour véhicule (C) selon l'une quelconque des revendications 1 à 5,
dans lequel le montant (9) est un montant avant du véhicule (C), et
le corps de dispositif (5) sert aussi comme un matériau intérieur du montant avant et a une forme se conformant à la forme d'une surface côté intérieur du montant avant.

7. Dispositif de conduite assistée (1) pour véhicule (C) selon l'une quelconque des revendications 1 à 6,
dans lequel chacun de l'élément de saisie d'image (8) et de l'écran d'affichage (4) a une forme quadrangulaire.

8. Dispositif de conduite assistée (1) pour véhicule (C) selon l'une quelconque des revendications 1 à 7, comprenant en outre :
une unité de traitement d'image pour convertir l'image saisie par le dispositif de saisie d'image (2) en une image du point de vue du conducteur qui est une image vue du point de vue du conducteur, convertir l'image du point de vue du conducteur en une image d'écran d'affichage (4) qui est une image sur un plan incluant l'écran d'affichage (4), et sortir l'image d'écran d'affichage (4) vers le dispositif d'affichage (3).
